# EUROPÄISCHE PATENTSCHRIFT

(11) **EP 4 225 578 B1**
(45) Veröffentlichungstag und Bekanntmachung des Hinweises auf die Patenterteilung: **10.12.2025**
(21) Anmeldenummer: 20792320.2
(22) Anmeldetag: 07.10.2020
(51) Int. Cl.: C09J 7/10, C09J 7/38, C08J 5/18, B44C 1/10

(54) **GEOMETRISCH DEFINIERTER HAFTKLEBRIGER KLEBEFILM**
GEOMETRICALLY DEFINED PRESSURE-SENSITIVE ADHESIVE FILM
FILM ADHÉSIF SENSIBLE À LA PRESSION DÉFINI GÉOMÉTRIQUEMENT

(43) Veröffentlichungstag der Anmeldung: 16.08.2023
(73) Patentinhaber: Lohmann GmbH & Co. KG, 56567 Neuwied (DE)
(72) Erfinder: DÜMMLER, Florian, 56566 Neuwied (DE); FRIEDLAND, Ruben, 56626 Andernach (DE)
(86) Internationale Anmeldenummer: PCT/EP2020/078187
(87) Internationale Veröffentlichungsnummer: WO 2022/073609

(56) Entgegenhaltungen:
- EP-A1- 2 746 043
- EP-A1- 3 524 648
- WO-A1-2016/150681
- DE-A1- 102017 131 236
- PROFOIL JETRIX: "UV-Flachbettdrucker", 31 January 2016 (2016-01-31), pages 1 - 8, XP055808485, Retrieved from the Internet <URL:https://docplayer.org/19217257-Die-neuste-generation-mit-roll-to-roll-option.html> [retrieved on 20210528]
- 3FAKTUR: "PolyJet: Das Verfahren - 3Faktur", 26 January 2019 (2019-01-26), pages 1 - 6, XP055808489, Retrieved from the Internet <URL:https://3faktur.com/3d-druck-materialien-und-verfahren/mjm-polyjet-verfahren/> [retrieved on 20210528]

## Beschreibung

### Technisches Gebiet

Die vorliegende Erfindung betrifft ein Verfahren zur Herstellung eines Klebebands mit zumindest einem haftklebrigen Klebefilm, welcher mittels Polyjet Modeling-Verfahren hergestellt wird.

### Stand der Technik

Zum Beschichten von Klebmassen werden Beschichtungsanlagen eingesetzt, welche den Liner üblicherweise in der vollen Breite beschichten, in eng begrenztem Maße sind auch in solchen Anlagen auch bestimmte Beschichtungsgeometrien möglich (punkt- oder streifenförmig). In jedem Falle aber ist weder eine völlig freie Variierung der Geometrien in einem einzigen Beschichtungsgang möglich, noch ist es möglich, unterschiedliche Geometrien, wie sie beispielsweise zur Verklebung von aus unterschiedlichen Buchstaben oder sonstigen Zeichen bestehenden Emblemen notwendig sind, in einem einzigen Beschichtungsgang herzustellen. Zur Erzeugung solcher Geometrien wird üblicherweise im Nachgang an den Beschichtungsprozess ein Formgebungsprozess eingesetzt, insbesondere ein Stanzprozess eingesetzt. Diese Vorgehensweise weist den Nachteil des häufig niedrigen Materialnutzungsgrads auf, da bei der Erzeugung der Stanzteile bis zu 90 % Abfall entsteht, welcher nicht genutzt werden kann.

Beim bisherigen herkömmlichen Beschichten stehen alle bekannten Beschichtungsverfahren zur Verfügung wie Bandpolymerisation, Hot-Melt-Beschichtung sowie Trocknung von wasser- bzw. lösemittelbasierten Systemen.

Bei einem Rapid Prototyping Verfahren handelt es sich in diesem Zusammenhang um ein Verfahren zur Herstellung einer geometrisch definierten Klebstoffschicht mittels des Polyjet Modeling- bzw. Inkjet-Verfahrens. Eine solchermaßen hergestellte Klebstoffschicht findet bevorzugt Verwendung als trägerloses Klebeband (Transferband), kann aber auch eine Klebstoffschicht eines Klebebands bilden. Klebstoffschichten, die als haftklebendes Band verwendet werden sollen und nicht mit einem stabilen Träger ausgerüstet werden, lassen sich nur schwer bis überhaupt nicht in eine geometrisch definierte Form bringen.

Alle bisherigen Versuche, dies mit den üblichen aktuellen Herstellverfahren zu bewerkstelligen, führen zu einer Beschädigung des hergestellten Bandes bzw. machen es unbrauchbar. Das erfindungsgemäß neue Herstellungsverfahren des Polyjet Modeling-Verfahrens fällt in die Kategorie der als "Rapid Prototyping" bzw. "Additive Manufacturing" bezeichneten Verfahren und ist damit im weitesten Sinne eine "3D-Druck"-Anwendung.

Verfahren zur Herstellung von Klebeflächen mittels eines 3D-Druckverfahrens sind aus der Literatur bereits bekannt. So beschreibt WO 2019/120818 A1 in sehr allgemeiner Form die Herstellung einer Klebefläche durch Auftragen eines Klebstoffs auf mindestens eine Fläche eines Fügeteils oder eines Transfer-Klebstoffträgers mittels einer 3D-Druckvorrichtung. Beansprucht werden hierin ebenso die entsprechende 3D-Druckvorrichtung, die nach dem Tintenstrahlprinzip arbeitet oder von einem Endlos-Strang gespeist wird sowie das Verfahren zum Kleben zweier Fügeteile. Beansprucht wird dieses Verfahren weiterhin für eine breite Auswahl von unterschiedlichsten Klebstoffarten, die hier Verwendung finden können sowie sowohl für homogene als auch für unterschiedliche Schichtdicken.

Spezielle fotohärtbare Harzzusammensetzungen für den 3D-Druck sind Thema der EP 3597668 A1 und der EP 3597669 A1, das hier eingesetzte Druckverfahren kann ein sogenanntes "Material Jetting"-Verfahren oder ein stereolithographisches Verfahren sein.

EP 3196000 B1 beschreibt ein Verfahren zur Herstellung eines Verbundwerkstoffbauteils durch Drucken eines Bauteilskeletts und Einbringen eines Harzes in dieses Skelett. Der Druck des Skeletts kann mittels PolyJet-Druckprozess erfolgen. WO 2019/1215170 A1 beansprucht eine wässrige Acrylatklebstoffdispersion für den 3D-Druck, WO 2020/146452 A1 einen additiven Herstellungsprozess unter Verwendung eines aminhaltigen klebenden Polymers und WO 2020/165193 A1 schließlich beansprucht ein 3D-Druck-Verfahren unter Verwendung eines metallpulverhaltigen Films. Die Herstellung von Klebstoffen und klebenden Produkten mittels additiver Herstellmethoden schließlich ist Thema der WO 2017/117035 A1; Hier wird eine Klebstoffvorläuferzusammensetzung auf eine strahlungsdurchlässige Fläche aufgebracht, anschließend werden verschiedene Abschnitte mit unterschiedlichen Strahlungsdosen und in jeweils unterschiedlicher Strahlungsdauer bestrahlt, so dass schließlich eine Klebfläche mit unterschiedlichen Eigenschaften entsteht. Im Projekt "Ressourceneffiziente Erzeugung haftklebender Formteile durch generative Druckverfahren" welches du die Deutsche Bundesstiftung Umwelt unter dem Aktenzeichen DBU-AZ 32912/01 gefördert wurde, wird ein Verfahren auf Basis eines Rotations-Tiefdrucks beschrieben. Hierbei werden UV-vernetzende Haftklebstoffe in Form des Tiefdruckverfahrens auf Liner aufgetragen und somit geometrisch definierte Drucklinge produziert.

WO 2016/150681 A1 beschreibt ein Verfahren zur Herstellung von Folienapplikationen, welche der Erzeugung von zusätzlichen dekorativen Effekten dienen. Hierzu wird zum Applizieren einer Übertragungslage einer Folie auf ein Substrat unter anderem ein radikalisch härtbarer Klebstoff mittels eines Tintenstrahldruckkopfs aufgebracht.

Auf dem Markt sind UV-Flachbettdrucker wie beispielsweise die Jetrix KX-Serie bekannt, welche mittels UV-Tinten in der Lage sind, dreidimensionale, nicht-haftende Objekte zu drucken.

EP 3524648 A1 beschreibt ein Verfahren zum Drucken auf dreidimensionalen Objekten mit gekrümmten Oberflächen, in dem ebenfalls mittels UV-Tinten gedruckt wird.

DE 102017131236 A1 beschreibt ein Verfahren zur Herstellung von Klebflächen mittels einer 3D-Druckvorrichtung, wobei eine Reihe von möglichen Klebstoffen und 3D-Druckverfahren genannt wird.

EP 2746043 A1 beschreibt mehrschichtige Aufkleber, welche aus einer gedruckten Polymerschicht, einer Klebstoffschicht und optional einem Release Liner bestehen. Die Polymerschicht lässt sich bevorzugt mittels digitaler Druckverfahren herstellen.

Das Polyjet Modeling-Verfahren und die hierzu benötigten Geräte werden bereits von Dienstleistern auf dem Markt angeboten. Der Anbieter 3Faktur beispielsweise vergleicht auf seiner Webseite das Polyjet-Modeling Verfahren mit dem Spritzguss und beschreibt das Drucken von lichtaushärtenden Polymeren, mittels welcher nicht-haftende dreidimensionale Modelle gedruckt werden können.

WO 2015/105047 A1 beschreibt das Herstellen von nicht-haftenden dreidimensionalen Strukturen mittels aushärtbarer Tinten und Pulvern, wobei zunächst mittels der Tinte eine äußere Schale hergestellt wird, welche anschließend mit dem Pulver gefüllt wird, um die dreidimensionale Struktur zu bilden.

Keines der genannten Schutzrechte bzw. Literaturhinweise aber beschreibt die Herstellung einer geometrisch definierten vorzugsweise auch lösemittelfreien Klebstoffschicht mit einem Rapid Prototyping-Verfahren, speziell einem sowohl ausgangsmaterial- als auch abfallsparenden Polyjet Modeling-Verfahren wie nachstehend näher beschrieben.

Die in den nachfolgenden Ausführungen verwendeten Begriffe sind dabei wie folgt zu verstehen:
Mit "klebender Film" oder "Klebefilm" ist im Folgenden jede Form von flächigen klebenden Systemen gemeint, also nicht nur Klebefilme, sondern auch Klebebänder, Klebefolien, Klebestreifen, Klebeplatten oder klebende Stanzteile. Des Weiteren umfasst der Ausdruck "Klebeband" oder "Klebefilm" auch sogenannte "Transferfilme", das heißt trägerlose Klebebänder.

Als "haftklebend", "haftklebrig" bzw. als "Haft"-klebmassen werden Klebmassen oder Klebefilme bezeichnet, welche in der Lage sind, zwei Fügepartner nur durch das Aufbringen von Druck miteinander zu verbinden. Insbesondere kann unter relativ schwachem Anpressdruck eine dauerhafte Verbindung zwischen den Fügepartnern realisiert werden. Die Verbindung ist reversibel, das heißt sie kann ohne Zerstörung der Fügeteile wieder gelöst werden.

Als "3D-Druck" ist im Folgenden der Auftrag von Klebmassen im Inkjet-Verfahren bzw. Polyjet Modeling-Verfahren auf einen Liner gemeint. Die Begriffe werden synonym verwendet.

Unter "Raumtemperatur" wird eine Temperatur von 23 ± 2°C verstanden.

### Darstellung der Erfindung

Ausgehend von dem bekannten Stand der Technik ist es eine Aufgabe der vorliegenden Erfindung, einen geometrisch definierten haftklebenden Klebefilm zur Verfügung zu stellen, welcher mittels einem abfallsparenden Polyjet Modeling-Verfahren hergestellt wurde. Die Aufgabe wird durch ein Verfahren mit den Merkmalen von Anspruch 1 gelöst.

Vorteilhafte Weiterbildungen ergeben sich aus den Unteransprüchen, der Beschreibung und den Figuren.

Entsprechend wird ein geometrisch definierter haftklebriger Klebefilm auf Basis eines generativen Druckverfahrens angegeben, wobei die Haftklebstoffzusammensetzung besonders Acrylate und Kautschuke umfasst.

Erfindungsgemäß werden mit dem Polyjet Modeling-Verfahren somit Hot-Melts, UV-Acrylate sowie lösemittel- und wasserbasierte Acrylate verarbeitet und in geometrisch definierten Formen gedruckt.

Des Weiteren ist es möglich in einer Ausführungsform die geometrische Ausprägung in alle Raumrichtungen herzustellen, sodass nicht nur zweidimensionale Klebebänder mit geometrischer Definition, sondern auch dreidimensionale Klebebänder mit geometrischer Definition hergestellt werden können.

In einer bevorzugten Ausführungsform weist ein solchermaßen hergestellter haftklebriger Klebefilm eine Klebkraft von mindestens 0,2 N/mm auf. Die Klebkraft wird hierbei auf Stahl in Anlehnung an DIN EN 1939:1996 bei 23°C ± 2 °C und 50 % ± 5 % relativer Luftfeuchte bei einer Abzugsgeschwindigkeit von 300 mm/min und einem Abzugswinkel von 180° bestimmt. Im Rahmen der Prüfung wird als Verstärkungsfolie eine geätzte PET-Folie mit einer Dicke von 50 µm verwendet. Die Klebung eines 25 mm breiten Messstreifens auf dem Stahlsubstrat wird dabei mittels einer Anrollwalze mit 5 kg bei einer Temperatur von 23°C ± 2°C vorgenommen. Der Klebefilm wird 10 Minuten nach der Applikation mit 300 mm/min abgezogen. Der Messwert (in N/mm) ergibt sich als Mittelwert aus fünf Einzelmessungen. Haftklebmassen wirken bei Raumtemperatur permanent haftklebrig, weisen also eine hinreichend geringe Viskosität und eine hohe Anfangsklebrigkeit auf, so dass sie die Oberfläche des jeweiligen Klebegrunds bereits bei geringem Andruck benetzen. Die Verklebbarkeit der Klebmassen beruht auf ihren adhäsiven Eigenschaften und die Wiederablösbarkeit auf ihren kohäsiven Eigenschaften.

In einer Ausführungsform ist das Klebeband trägerlos und somit geeignet, einen Transferfilm zu bilden
Bei einem Transferfilm oder Transferklebeband ist die Klebmasse, die im Endzustand dem fertigen Klebefilm entspricht, vor der Applikation auf einem flexiblen Material wie z.B. einer Folie oder zwischen zwei flexiblen Materialien aufgebracht. Diese Materialien werden als Release Liner bezeichnet, sie sind mit einer Trennschicht zur Klebefläche hin versehen und/oder weisen anti-adhäsive Eigenschaften auf.

Beim Einsatz zweier Liner beispielsweise wird zur Applikation des Klebefilms zunächst ein Liner entfernt und der Klebefilm mit der jetzt frei liegenden Klebefläche auf einem ersten Fügeteil appliziert. Anschließend wird dann der zweite Liner entfernt und die nun freiliegende Klebstoffoberfläche mit dem zweiten Fügeteil verbunden. Die Klebmasse kann so direkt zur Verbindung zweier Oberflächen verwendet werden.

Mit einem solchen haftklebrigen, trägerlosen Transferklebefilm wird eine in Bezug auf Positionierung und Dosierung sehr genaue Klebung ermöglicht.

Es besteht ebenfalls die Möglichkeit zur Herstellung von Klebefilmen oder Klebebändern mit einer Kombination aus verschiedenen Klebstoffen bzw. Klebstoffsystemen. So kann z.B. die erste Schicht eine UV-Acrylatschicht und die zweite Schicht ein kautschukbasierter Hotmelt sein. Somit ist es möglich durch hintereinanderschalten unterschiedlicher Druckköpfe einen asymmetrischen Klebebandaufbau mit allen im Folgenden genannten Klebmassen zu realisieren. Eine dieser aufgedruckten Klebmassen kann auch als Trägersystem fungieren, sodass alle erdenklichen Schichtaufbauten technisch möglich sind.

In einer weiteren Ausführungsform weist das Klebeband einen einzigen doppelseitig abweisenden Liner auf. Hierbei wird eine erste Seite des Klebefilms mit der einen Seite des doppelseitig trennend ausgerüsteten Liners abgedeckt und eine zweite Seite des Klebefilms bei dessen Aufwicklung auf eine Rolle oder eine Spule anschließend mit der Rückseite des doppelseitig trennend ausgerüsteten Liners.

In einer bevorzugten Weiterbildung beträgt die Dicke der geometrisch definierten Haftklebmasse, sowohl in Form eines Transferklebefilmes als auch beschichtet auf einem flächigen Gebilde, zwischen 1 µm und 3000 µm, weiter bevorzugt zwischen 10 µm und 2000 µm und besonders bevorzugt zwischen 50 µm und 1000 µm.

Schichtdicken zwischen 100 µm und 1000 µm sind bestens geeignet zur Überbrückung von Toleranzen bei den zu verklebenden Fügeteilen. Schichtdicken zwischen 1 µm und 50 µm führen zu einer verringerten Haftung auf den Fügeteilen, reduzieren jedoch gleichzeitig den Materialeinsatz.

Als Klebmassen kommen zum einen alle dem Fachmann bekannten Klebmassen auf Basis von UV-Acrylaten zum Einsatz, welche mittels UVA, UVB oder UVC polymerisiert werden können, sowie alle dem Fachmann bekannten Klebmassen auf Hotmeltbhasis.

Des Weiteren kommen alle dem Fachmann bekannten Klebmassen auf der Basis von lösemittel- und wasserbasierten Acrylaten zum Einsatz, welche in einem nachgelagerten Schritt direkt hinter der Düse getrocknet werden.

Beispiele für solche Klebmassen sind in der Klebepraxis sowie in der Literatur hinreichend bekannt und beschrieben.

In einer bevorzugten Weiterbildung sind die Klebmassen partiell funktionalisiert, sodass ein funktioneller Klebefilm entsteht. Einbringungen der Funktionalitäten können mittels Füllstoffen zur Erzeugung von elektrisch oder thermisch leitfähigen Klebefilmen oder Klebebändern sein, sowie durch das Einbringen von Arzneistoffen oder medizinischen Wirkstoffen zur Erzeugung von Wirkstoff pflastern. Durch das Polyjet Modeling-Verfahren können die Funktionalitäten definiert geometrisch aufgetragen werden, was zu einer Materialeffizienz und gleichzeitig zu einer Verbesserung der geforderten Funktionalität beiträgt.

In einer weiter bevorzugten Ausbildung ist die Funktionalisierung zur (partiellen) Einfärbung der Klebefilme, sowie zur Funktionalisierung mittels Bioziden und Herbiziden.

### Kurze Beschreibung der Figuren

Bevorzugte weitere Ausführungsformen der Erfindung werden durch die nachfolgende Beschreibung der Figuren näher erläutert. Dabei zeigen:
Figur 1 komplexer geometrisch definierter haftklebriger Klebefilm nach einer Ausführungsform; und
Figur 2 schematische Darstellung eines Rolle-zu-Rolle- Verfahrens.

### Detaillierte Beschreibung bevorzugter Ausführungsbeispiele

Im Folgenden werden bevorzugte Ausführungsbeispiele anhand der Figuren beschrieben. Dabei werden gleiche, ähnliche oder gleichwirkende Elemente in den unterschiedlichen Figuren mit identischen Bezugszeichen versehen, und auf eine wiederholte Beschreibung dieser Elemente wird teilweise verzichtet, um Redundanzen zu vermeiden.

Herstellung der geometrisch definierten haftklebrigen Klebeschichten Zur Herstellung der jeweiligen geometrisch definierten haftklebrigen Klebeschichten werden die jeweiligen Haftklebstoffmassen in Vorlagebehältern vorgelegt. Die Druckviskosität liegt zwischen 2 mPas und 100 mPas, bevorzugt zwischen 5 mPas und 20 mPas.

Anschließend wird der Klebstoff mittels Piezoaktuatoren in den Düsen bei Frequenzen zwischen 10 kHz und 100 kHz, bevorzugt zwischen 12 kHz und 60 kHz auf den Liner aufgetragen. Das aufgetragene Tropfenvolumen kann zwischen 2 und 200 pl (Pikoliter) variieren, typischerweise zwischen 10 und 100 pl.

Zur Herstellung der Klebmasseschichten, das heißt der trägerlosen Haftklebebänder werden die verschiedenen Klebmassen (UV-Acrylat, lösemittel- oder wasserbasiertes System) auf einen konventionellen Liner (silikonisierte Polyesterfolie) mittels eines Druckkopfes im Inkjetverfahren (schichtweise) aufgebracht und unmittelbar danach im Anschluss entweder mit einer UV-Lampe mit UVA, UVB oder UVC bestrahlt oder getrocknet. Die Dicke des Transferfilms beträgt danach 300 ± 20 µm. Die so hergestellten Klebefilme werden jeweils unverzüglich nach der Polymerisation bzw. Trocknung mit einem zweiten Liner (silikonisierte Polyesterfolie mit geringerer Trennkraft als der erste Liner) auf der noch offenen Klebeseite laminiert.

### Beispielhafte Herstellung des geometrisch definierten haftklebrigen Klebefilms

Im vorliegenden Beispiel wurde ein Standard-UV-Acrylat aus dem Hause Lohmann verwendet, welches aus 2-Ethylhexylacrylat, Acrylsäure und einem radikalischen Photoinitiator besteht.

Dieser wurde mit einem Fujifilm Dimatix Q-Class Druckkopf in einer Breite von 64 mm mit einem Tropfenvolumen von 80 pl gedruckt. Die Formgebung wurde analog zu den nachfolgend beschriebenen Prüfvorschriften gewählt und somit in Form von Prüfstreifen mit einer Dicke von etwa 300 µm (Beispiel K1).

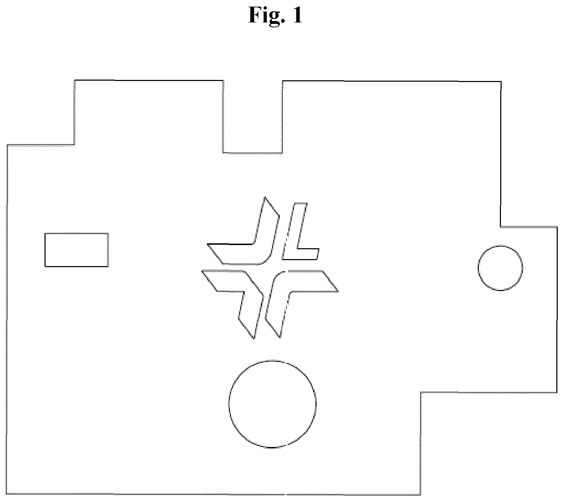

Gleichzeitig wurde eine komplexere Geometrie analog zu Figur 1 gedruckt, um die Grenzen des Verfahrens zu untersuchen.

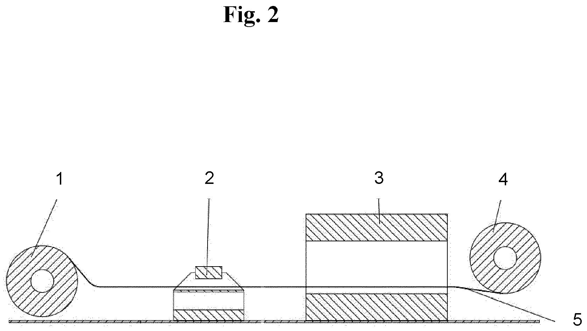

Der geometrisch definierte haftklebrige Klebefilm wurde in einem kontinuierlichen Rolle-zu-Rolle- Prozess hergestellt (Figur 2). Die Bezugszeichen haben dabei folgende Bedeutung:
Parallel hierzu wurde mittels einer Beschichtungsanlage ein Klebefilm mit der identischen Rezeptur auf den identischen Liner in einer Dicke von 500 µm beschichtet (R1) um die mechanische Performance des im Polyjet Modeling-Verfahren hergestellten Klebefilms vergleichend beurteilen zu können.

### Ergebnisse der Haftklebmassen bzgl. Dicke, Klebkraft und Zugscherfestigkeit

### Klebkraft:

Die Klebkraft wird auf Stahl in Anlehnung an DIN EN 1464:2010 bei 23°C ± 2°C und 50 % ± 5 % relativer Luftfeuchte bei einer Abzugsgeschwindigkeit von 300 mm/min und einem Abzugswinkel von 110° im Rollenschältest bestimmt. Als Verstärkungsfolie wird eine geätzte Folie aus PET mit einer Dicke von 50 µm verwendet. Die Klebung eines 25 mm breiten Messstreifens auf dem Stahlsubstrat wird dabei mittels einer Anrollwalze mit 5 kg bei einer Temperatur von 23°C ± 2°C vorgenommen. Der Klebefilm wird 10 Minuten (Initial) bzw. 24 h (24 h) nach der Applikation mit 300 mm/min abgezogen. Der Messwert (in N/mm) ergibt sich als Mittelwert aus fünf Einzelmessungen inkl. Standardabweichung.

### Dicke:

Als Kenngröße für die Dicke des Klebstofffilms werden Dickenmessungen in Anlehnung an DIN EN 1942:2008 bei 23°C ± 2°C und 50 % ± 5 % relativer Feuchte durchgeführt. Die Ergebnisse sind in mm angegeben. Angegeben ist jeweils der Mittelwert aus fünf Messungen.

### Zugscherfestigkeit:

Als Kenngröße für die Festigkeit der Klebung auf Stahl werden Zugscherversuche nach DIN EN 1465 bei 23°C ± 2°C und 50 % ± 5 % relativer Luftfeuchte mit einer Prüfgeschwindigkeit von 10 mm/min durchgeführt. Als Prüfsubstrate kommen Stähle der Legierung 1.4301 zum Einsatz, welche zum einen mit Aceton gereinigt werden und zum anderen mittels Kreuzschliff einer mechanischen Oberflächenvorbehandlung unterzogen werden. Die Proben werden mittels einer Anrollwalze mit 5 kg bei einer Temperatur von 23 °C ± 2 °C hergestellt und 24 h nach dem applizieren geprüft. Die Ergebnisse sind in MPa (N/mm²) angegeben. Angegeben ist jeweils der Mittelwert aus fünf Messungen inkl. Standardabweichung und Bruchbildbewertung.

| Beispiel: | K1 | R1 |
|---|---|---|
| Dicke [mm] | 0,30 ± 0,02 | 0,50 ± 0,05 |
| Klebkraft (initial) [N/mm] | 1,40 ± 0,10 (AF/CF) | 1,32 ± 0,10 (AF/CF) |
| Klebkraft (24 h) [N/mm] | 1,69 ± 0,05 (AF/CF) | 1,65 ± 0,04 (AF/CF) |
| Zugscherfestigkeit [MPa] | 0,46 ± 0,05 (CF) | 0,22 ± 0,05 (CF) |
| Legende: AF: Adhäsionsbruch; CF: Kohäsionsbruch | | |

Die Klebefilme K1 und R1 besitzen eine identische chemische Zusammensetzung. Lediglich das Herstellverfahren wird variiert. So wird R1 mittels Standardbeschichtungsverfahren im 2-Walzenauftrag in einer Breite von 450 mm beschichtet und bandpolymerisiert. K1 wird im Gegensatz hierzu mittels Polyjet Modeling-Verfahren in der zu prüfenden Breite aufgetragen und ebenfalls bandpolymerisiert. Die beiden Klebefilme besitzen allerdings auf Grund der Herstellungsart unterschiedliche Dicken.

Die Klebmassen K1 und R1 weisen im Rahmen der Standardabweichung eine gleiche Klebkraft sowohl initial als auch nach 24 h auf.

Hinsichtlich der Zugscherfestigkeit weist allerdings K1 eine höhere Zugscherfestigkeit als R1 auf, was jedoch erfahrungsgemäß auf die geringere Klebschichtdicke zurückzuführen ist. Somit wären die Zugscherfestigkeiten bei identischer Klebschichtdicke ebenfalls im Rahmen der Standardabweichung gleich. Insgesamt kann damit festgestellt werden, dass die geometrisch definierte haftklebrige Klebeschicht welche mittels Polyjet Modeling-Verfahren hergestellt wurde, die gleichen klebtechnischen Eigenschaften wie ein konventionell beschichteter Klebefilm aufweist.

Soweit anwendbar, können alle einzelnen Merkmale, die in den Ausführungsbeispielen dargestellt sind, miteinander kombiniert und/oder ausgetauscht werden, ohne den Bereich der Erfindung zu verlassen.

### Bezugszeichenliste

- 1: Abwickler
- 2: Druckkopf mit den Düsen
- 3: Bestrahlung/Trocknung
- 4: Aufwickler
- 5: Klebebandtransportliner

## Patentansprüche

1. Verfahren zur Herstellung eines Klebebands mit zumindest einem haftklebrigen Klebefilm, welcher in der Lage ist, zwei Fügepartner nur durch das Aufbringen von Druck miteinander zu verbinden, wobei das Klebeband entweder als ein Transferklebeband ausgebildet ist, wobei der Klebefilm auf einem Release Liner oder zwischen zwei Release Linern aufgebracht wird und die Release Liner dazu vorgesehen sind, bei einer Applikation des Transferklebebands zur Freilegung von Klebeflächen des Klebefilms abgezogen zu werden, oder als ein gewickeltes Klebeband mit einem einzigen doppelseitig abweisenden Liner hergestellt wird, wobei eine erste Seite des Klebefilms mit einer ersten Seite des Liners und eine zweite Seite des Klebefilms mit einer zweiten Seite des Liners abgedeckt ist, **dadurch gekennzeichnet, dass** der Klebefilm mittels eines Polyjet Modeling-Verfahren hergestellt wird, wobei der Klebstoff mittels Piezoaktuatoren in den Düsen bei Frequenzen zwischen 10 kHz und 100 kHz auf den Release Liner oder den doppelseitig abweisenden Liner aufgetragen wird und kein nachgelagerter Formgebungsprozess erfolgt.

2. Verfahren gemäß Anspruch 1, **dadurch gekennzeichnet, dass** der Klebefilm mit sowohl in zwei- als auch dreidimensionaler Sicht geometrisch definierte Ausprägungen hergestellt wird.

3. Verfahren gemäß Anspruch 1 und 2, **dadurch gekennzeichnet, dass** das aufgetragene Tropfenvolumen zwischen 2 und 200 pl variiert.

4. Verfahren gemäß einem der vorhergehenden Ansprüche, **dadurch gekennzeichnet, dass** der Klebefilm aus mehreren unterschiedlichen Klebfilmlagen hergestellt wird, welche sowohl Variationen aus UV-Acrylate, Hotmelts und lösemittel- und wasserbasierten Acrylaten sind als auch Variationen der vier verschiedenen Chemien.

5. Verfahren gemäß einem der vorhergehenden Ansprüche, **dadurch gekennzeichnet, dass** der Klebefilm in einer Dicke von zwischen 1 µm und 3000 µm hergestellt wird.

6. Verfahren gemäß einem der vorhergehenden Ansprüche, **dadurch gekennzeichnet, dass** das Klebeband zur Erzeugung einer thermischen oder elektrischen Leitfähigkeit funktionalisiert wird.

7. Verfahren gemäß einem der vorhergehenden Ansprüche, **dadurch gekennzeichnet, dass** das Klebeband zur Erzeugung von Wirkstoffpflastern mittels Arzneistoffen oder medizinischen Wirkstoffen funktionalisiert wird.

8. Verfahren gemäß einem der vorhergehenden Ansprüche, **dadurch gekennzeichnet, dass** das Klebeband mittels Herbiziden und Bioziden funktionalisiert wird.

9. Verfahren gemäß einem der vorhergehenden Ansprüche, **dadurch gekennzeichnet, dass** der Klebefilm eingefärbt und/oder mit Farbeffekten versehen wird.

## Claims

1. Method of manufacturing a tape comprising at least one pressure-sensitive adhesive film capable of adhering two bonding partners using only pressure, wherein the tape is either a transfer tape in which the adhesive film is arranged on one release liner or between two release liners, the release liners being configured to be peeled off during an application of the transfer tape, thus revealing adhesive surfaces of the adhesive film, or the tape is a wound tape comprising a single liner which is anti-adhesive on both sides, wherein a first side of the adhesive film is covered by a first side of the liner and a second side of the adhesive film is covered by a second side of the liner, **characterized in that** the adhesive film is manufactured using a polyjet modeling process, wherein the adhesive is dispensed using nozzles comprising piezo actuators at frequencies between 10 kHz and 100 kHz without any later shaping processes.

2. Method according to claim 1, **characterized in that** the adhesive film is manufactured with characteristics which are geometrically defined in both a two- and three-dimensional perspective.

3. Method according to claim 1 and 2, **characterized in that** the dispensed drop size varies between 2 and 200 pl.

4. Method according to any of the preceding claims, **characterized in that** the adhesive film is manufactured using multiple different adhesive film layers which are both variations of UV acrylates, hotmelts, solvent-based acrylates and water-based acrylates as well as variations of these four types of chemistry.

5. Method according to any of the preceding claims, **characterized in that** the adhesive film is manufactured with a thickness between 1 µm and 3000 µm.

6. Method according to any of the preceding claims, **characterized in that** the tape is functionalized to provide thermal or electrical conductivity.

7. Method according to any of the preceding claims, **characterized in that** the tape is functionalized using drugs or medical compounds to create a medical plaster.

8. Method according to any of the preceding claims, **characterized in that** the tape is functionalized using herbicides or biocides.

9. Method according to any of the preceding claims, **characterized in that** the adhesive film is dyed and/or provided with color effects.

## Revendications

1. Procédé de fabrication d'un ruban comprenant au moins un film adhésif sensible à la pression, capable de coller deux éléments de liaison par simple pression. Le ruban est soit un ruban adhésif de transfert disposé sur un support antiadhésif, soit entre deux supports antiadhésifs, ces supports étant conçus pour être décollés lors de l'application du ruban adhésif de transfert, révélant ainsi les surfaces adhésives du film adhésif. Le ruban est soit un ruban enroulé comprenant un support unique antiadhésif sur ses deux faces, un premier côté du film adhésif étant recouvert par un premier côté du support et un second côté par un second côté du support. Le procédé est **caractérisé en ce que** le film adhésif est fabriqué par un procédé d'impression PolyJet, l'adhésif étant distribué par des buses à actionneurs piézoélectriques à des fréquences comprises entre 10 kHz et 100 kHz, sans mise en forme ultérieure.

2. Procédé selon la revendication 1, **caractérisé en ce que** le film adhésif est fabriqué avec des caractéristiques géométriquement définies en deux et trois dimensions.

3. Procédé selon les revendications 1 et 2, **caractérisé en ce que** la taille des gouttes déposées varie entre 2 et 200 pl.

4. Procédé selon l'une quelconque des revendications précédentes, **caractérisé en ce que** le film adhésif est fabriqué à partir de plusieurs couches de film adhésif différentes, constituées à la fois d'acrylates UV, de colles thermofusibles, d'acrylates à base de solvants et d'acrylates à base d'eau, ainsi que de variantes de ces quatre types de chimie.

5. Procédé selon l'une quelconque des revendications précédentes, **caractérisé en ce que** le film adhésif est fabriqué avec une épaisseur comprise entre 1 µm et 3000 µm.

6. Procédé selon l'une quelconque des revendications précédentes, **caractérisé en ce que** le ruban adhésif est fonctionnalisé pour assurer une conductivité thermique ou électrique.

7. Procédé selon l'une quelconque des revendications précédentes, **caractérisé en ce que** le ruban adhésif est fonctionnalisé par des médicaments ou des composés médicaux pour créer un pansement médical.

8. Procédé selon l'une quelconque des revendications précédentes, **caractérisé en ce que** le ruban adhésif est fonctionnalisé par des herbicides ou des biocides.

9. Procédé selon l'une quelconque des revendications précédentes, **caractérisé en ce que** le film adhésif est teinté et/ou doté d'effets de couleur.
